# EUROPEAN PATENT APPLICATION

(11) **EP 4 394 602 A1**
(43) Date of publication of application: **03.07.2024**
(21) Application number: 22307061.6
(22) Date of filing: 29.12.2022
(51) Int. Cl.: G06F 11/07, G06F 11/36, G09G 3/00, G06T 5/50, G09G 5/00, H04N 19/172, H04N 21/84

(54) **METHOD FOR SYSTEM VERIFICATION AND APPARATUS FOR IMPLEMENTING THE SAME**

(71) Applicant: ATEME, 78140 Velizy Villacoublay (FR)
(72) Inventor: Besnard, Valentin, 91120 Palaiseau (FR); Bivolarov, Stoyan, 35000 Rennes (FR); Cornard, Guillaume, 35440 Montreuil sur Ille (FR); Saadi, Noureddine, 95870 Bezons (FR)
(74) Representative: Plasseraud IP

(57) **Abstract**

A method for verifying a system is proposed, which comprises: obtaining a data flow generated in output by the system during runtime execution of the system for a time period, the data flow comprising a system output data sequence; processing the data flow to obtain at least a set of metadada that are respectively related to the data of the system output data sequence; and determine whether or not a property is verified based on the metadata.

## Description

The present disclosure relates to the field of system verification and/or validation, and more particularly to system verification using a formal verification framework.

Various schemes of validation and verification (V&V) of computer systems have been developed to analyze the operations of complex systems, among which so-called formal verification schemes are widely used for verification of computer systems.

Four different types of formal verification schemes that may be used for verification of computer systems may be distinguished. A first type of formal verification scheme is the so-called "theorem proving" method, which aims at using mathematical techniques to realize proofs of algorithms. The three other types of methods, which are the so-called "model-checking" method, the so-called "abstract interpretation" method, and the so-called "formal verification at runtime" method, are all model-based methods. Such model-based methods require defining or determining a model of the system behavior prior to verifying properties of the system on the basis of the system behavior model.

Formal verification at runtime can also be applied by instrumenting the system code (that is, adding code designed to obtain system information that is not readily available), or monitoring system operations. These techniques however require to be able to modify and/or adapt the system software code. In particular, computer system instrumentation requires modifying the software of the computer system, through which the system behavior may be inadvertently modified (e.g., slow down system execution, have side effects on some variables, etc.). As a consequence, properties which may have been verified as false on the original computer system may turn out to be verified on the instrumented system.

Likewise, model-checkers used for verifying software code (e.g., C code) require instrumenting the code, and further require defining a system memory model and a competition model (for managing threads, mutex, etc.).

Computer systems, such as systems for processing (e.g., encoding) multimedia data, may be highly complex in that they use software executable programs based on millions of software code lines and/or hundreds of software libraries.

The use of the above formal verification schemes for such complex systems ends up being extremely difficult, if not impossible, in view of the technical burden of developing a model that somewhat accurately represents the behavior of the system to be verified. In addition, when such a complex system has already been developed, defining an a priori model represents a highly complex and costly task, both in time and in development resources, as defining an a priori model would require starting from the software code of the entire system to define a model of the system in a formal language (or in a modeling language).

The lack of system model to be verified renders the conventional formal verification methods unapplicable for verifying complex computer systems.

In addition, it is not desirable that V&V schemes that may be used for verifying a computer system have side-effects on the software code of the system (no instrumentation), so as to avoid potential software regressions of the system.

There is therefore a need to provide a scheme for verifying a computer system that can be used on complex systems for which the design of a model is not a feasible or realistic option.

There is also a need for providing an improved computer system verification scheme and system and apparatuses implementing the same that address at least some of the above-described drawbacks and shortcomings of the conventional technology in the art.

It is an object of the present subject disclosure to provide an improved computer system verification scheme and apparatuses implementing the same that address at least some of the above-described drawbacks and shortcomings of the conventional technology in the art.

Another object of the present subject disclosure is to provide an improved computer system verification scheme and apparatuses implementing the same for alleviating the above-described drawbacks and shortcomings of conventional V&V schemes, in particular with respect to verifying a system that produces in output one or more data flows.

Yet another object of the present subject disclosure is to provide an improved computer system verification scheme and apparatuses implementing the same for alleviating the above-described drawbacks and shortcomings of conventional V&V schemes, in particular with respect to verifying a multimedia data processing system that produces in output one or more multimedia data flows.

To achieve these objects and other advantages and in accordance with the purpose of the present subject disclosure, as embodied and broadly described herein, in one aspect of the present subject disclosure, a method for verifying a computer system is proposed, which comprises: obtaining a data flow generated in output by the system during runtime execution of the system for a time period, the data flow comprising a system output data sequence ; processing (e.g., parsing) the data flow to obtain at least a set of metadada that are respectively related to the data of the system output data sequence; and determine whether or not a property (e.g., of the system, or related to the system) is verified (e.g., by the data flow) based on (e.g., by processing, for example by analyzing) the metadata.

In one or more embodiments, the property may be defined based on the system output data sequence.

In one or more embodiments, the property may be related to a system configuration parameter.

In one or more embodiments, the property may be related to a system feature.

In one or more embodiments, the property may be related to the data input of the system during the time period.

In one or more embodiments, the proposed method may further comprise: producing a verified version of the system based on the determination of whether the property is verified or not.

In one or more embodiments, data of the system output data sequence may be successively generated by execution of the system over the time period based on input data provided as input to the system.

In one or more embodiments, the metadata may be determined based on data of the system output data sequence. For example, the metadata may be determined by parsing the system output data sequence.

In one or more embodiments, the metadata may be extracted from the system output data sequence.

In one or more embodiments, the system may be configured for multimedia data processing, and the system output data sequence may comprise an output sequence of images generated as output data by the system being executed during the time period using input data. In such embodiments, the input data may comprise an input sequence of images. Further, in such embodiments, the metadata may be respectively related to images of the output sequence of images. In some embodiments, the metadata may be related to data comprised in the output flow outputted by the multimedia data processing system. For example, the metadata may be related to one or more manifests (e.g., DASH (Dynamic Adaptive Streaming over HTTP) manifests), the content of which may possibly evolve over time (e.g., through one or more updates), comprised in the output flow, or the metadata may be related to one or more playlists (e.g., HyperText Transfer Protocol, HTTP, Live Streaming (HLS) playlists), the content of which may possibly evolve over time (e.g., through one or more updates), comprised in the output flow.

In another aspect of the present subject disclosure, a method for analyzing runtime operations of a computer system is proposed, which comprises: obtaining a data flow generated in output by the system during runtime execution of the system for a time period, the data flow comprising a system output data sequence; processing (e.g., parsing) the data flow to obtain at least a set of metadada that are respectively related to the data of the system output data sequence; and determining whether or not a property is verified (e.g., by the data flow) based on processing (e.g., analyzing) the metadata.

In another aspect of the present subject disclosure, an apparatus is proposed, which comprises a processor, and a memory operatively coupled to the processor, wherein the apparatus is configured to perform a method as proposed in the present subject disclosure.

In yet another aspect of the present subject disclosure, a non-transitory computer-readable medium encoded with executable instructions which, when executed, causes an apparatus comprising a processor operatively coupled with a memory, to perform a method as proposed in the present subject disclosure, is proposed.

For example, in embodiments, the present subject disclosure provides a non-transitory computer-readable medium encoded with executable instructions which, when executed, causes an apparatus comprising a processor operatively coupled with a memory, to perform a method for computer system verification which comprises: obtaining, by the processor, a data flow generated in output by the system during runtime execution of the system for a time period, the data flow comprising a system output data sequence; processing, by the processor, the data flow to obtain at least a set of metadada that are respectively related to the data of the system output data sequence; and determining, by the processor, whether or not a property is verified based on the metadata.

In yet another aspect of the present subject disclosure, a computer program product comprising computer program code tangibly embodied in a computer readable medium, said computer program code comprising instructions to, when provided to a computer system and executed, cause said computer to perform a method as proposed in the present subject disclosure, is proposed.

In another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1 is a block diagram illustrating an exemplary method in accordance with one or more embodiments;
Figure 2a illustrates an exemplary sequence of images generated as output data by a system verified at runtime in accordance with one or more embodiments;
Figure 2b illustrates an exemplary state space;
Figure 2c illustrates an exemplary path in the state space of Fig. 2b;
Figure 2d illustrates an exemplary linear graph generated based on output data of a system verified at runtime in accordance with one or more embodiments.
Figure 3a illustrates an exemplary result log of a verification system configured for detecting a property in a TS flow outputted by a system at runtime execution according to one or more embodiments;
Figure 3b illustrates an exemplary property that may be verified based on an exemplary HLS playlist according to one or more embodiments;
Figure 3c illustrates an exemplary HLS master playlist based on which a data object may be generated to verify a property according to embodiments of the present disclosure;
Figure 3d illustrates an exemplary HLS media playlist based on which a data object may be generated to verify a property according to embodiments of the present disclosure;
Figure 3e illustrates an exemplary property that may be verified based on an exemplary DASH manifest file according to one or more embodiments;
Figure 4 (spanning Figs. 4a, 4b, and 4c) illustrates an exemplary DASH manifest based on which a data object may be generated to verify a property according to embodiments of the present disclosure;
Figure 5a is a block diagram illustrating a system verification environment in accordance with one or more embodiments;
Figure 5b illustrates two exemplary properties for blackout detection as Büchi automata in accordance with one or more embodiments;
Figure 5c is a block diagram illustrating a parsing engine of a runtime system verification unit in accordance with one or more embodiments;
Figure 5d is a block diagram illustrating a core engine of a runtime system verification unit in accordance with one or more embodiments;
Figure 5e illustrates two exemplary properties related to HLS as Büchi automata in accordance with one or more embodiments;
Figure 6 is a block diagram of an exemplary verification apparatus in accordance with one or more embodiments.

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to units, functions, engines, subsystems, block diagrams and flowchart illustrations of the methods, systems, and computer program according to one or more exemplary embodiments. Each described unit, function, engine, block, subsystem of the block diagrams and flowchart illustrations can be implemented in hardware, software, firmware, middleware, microcode, or any suitable combination thereof. If implemented in software, the units, functions, engines, blocks, subsystems of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the units, functions, engines, subsystems, blocks of the block diagrams and/or flowchart illustrations described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms "memory" and "computer storage media" include any type of data storage device, such as, without limitation, a hard drive, a flash drive or other flash memory devices (e.g., memory keys, memory sticks, key drive), CD-ROMs or other optical data storage devices, DVDs, magnetic disk data storage devices or other magnetic data storage devices, data memory components, RAM, ROM and EEPROM memories, memory cards (smart cards), solid state drive (SSD) memories, and any other form of medium able to be used to transport or store or memorize data or data structures able to be read by a computer processor, or a combination thereof. Furthermore, various forms of computer-readable media may transmit or carry instructions to a computer, such as a router, a gateway, a server, or any data transmission equipment, whether this involves wired transmission (via coaxial cable, optical fibre, telephone wires, DSL cable or Ethernet cable), wireless transmission (via infrared, radio, cellular, microwaves) or virtualized transmission equipment (virtual router, virtual gateway, virtual tunnel end, virtual firewall). According to the embodiments, the instructions may comprise code in any computer programming language or computer program element, such as, without limitation, the languages of assembler, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs. The terms "in particular", "for example", "example", "typically" are used in the present description to denote examples or illustrations of non-limiting embodiments that do not necessarily correspond to preferred or advantageous embodiments with respect to other possible aspects or embodiments.

The terms "operationally coupled", "coupled", "mounted", "connected" and their various variants and forms used in the present description refer to couplings, connections and mountings that may be direct or indirect, and comprise in particular connections between electronic equipment or between portions of such equipment that allow operations and modes of operation as described in the present description. In addition, the terms "connected" and "coupled" are not limited to physical or mechanical connections or couplings. For example, an operational coupling may include one or more wired connection(s) and/or one or more wireless connection(s) between two or more items of equipment that allow simplex and/or duplex communication links between the equipment or portions of the equipment. According to another example, an operational coupling or a connection may include a wired-link and/or wireless coupling for allowing data communications between a server of the proposed system and another item of equipment of the system.

"Server" or "platform" in the present subject disclosure means any (virtualized or non-virtualized) point of service or computer device or system performing data processing operations, one or more databases, and/or data communication functions. For example, and without limitation, the term "server" or the term "platform" may refer to a physical processor operationally coupled to associated communication, database and data storage functions, or refer to a network, a group, a set or a complex of processors and associated data storage and networking equipment, and to an operating system and one or more database system(s) and application software supporting the services and functions provided by the server. A server or platform may be configured to operate in or as part of a cloud computing environment. A computer device or system may be configured so as to send and receive signals, via wireless and/or wired transmission networks(s), or be configured so as to process and/or store data or signals, and may therefore operate as a server. Equipment configured so as to operate as a server may thus include, by way of non-limiting example, dedicated servers mounted on a rack, cloud-based servers, desktop computers, laptop computers, service gateways (sometimes called "box" or "home gateway"), multimedia decoders (sometimes called "set-top boxes"), integrated equipment combining various functionalities, such as two or more of the abovementioned functionalities. The servers may vary greatly in terms of their configuration or their capabilities, but a server will generally include one or more central processing unit(s) and a memory. A server may also include one or more item(s) of mass memory equipment, one or more electric power supply/supplies, one or more wireless and/or wired network interface(s), one or more input/output interface(s), one or more operating system(s), such as Windows Server, Mac OS X, Unix, Linux, FreeBSD, or an equivalent.

The terms "application" or "application program" (AP) and their variants ("app", "web app", etc.) as used in the present description correspond to any tool that operates and is operated by way of a computer in order to provide or execute one or more function(s) or task(s) for a user or another application program. In order to interact with an application program and control it, a user interface may be provided on the equipment on which the application program is implemented. For example, a graphical user interface (or GUI) may be generated and displayed on a screen of the user equipment, or an audio user interface may be played back to the user using a speaker, a headset or an audio output.

The term "multimedia content" as used in the present description corresponds to any audio and/or video or audiovisual content, with or without closed captions, open captions, subtitles, timed text or visual descriptors.

In the present description, the terms "real-time" distribution, distribution "in linear mode", distribution "in linear TV mode", distribution "in dynamic mode" and "live" distribution or distribution "in live mode" are used interchangeably to denote the distribution in live mode or dynamic mode of multimedia content in a content distribution system to terminals, comprising in particular the distribution of the content as it is generated, as opposed to distributing content generated previously, upon an access request from a user (distribution upon an access request or "static" distribution or distribution in static mode), such as for example content recorded on a server and made available to users by a video on demand (VOD) service.

In the present description, the terms "real-time" are also used in the context of video encoding or compressing video content, to denote the encoding or compression of video content at least at the same speed, for example expressed in frames per second, as it is generated by one or more video content sources. For instance, if content is generated at 50 frames per second (fps) it will be deemed encoded in real-time as long as it is also encoded at at least 50 fps.

The terms "media data", "media content", "multimedia data", and "multimedia content" as used interchangeably in the present description correspond to any audio, video, and/or text, or audio-visual data content, with or without closed captions, open captions, subtitles, timed text, or visual descriptors. Furthermore, the terms "media" and "multimedia" are used interchangeably in the present subject disclosure.

In the present description, the term "live content" refers to content, for example multimedia content, that is distributed, for example using an Over-The-Top (OTT) distribution mode, in dynamic mode (as opposed to the static distribution mode). Live content will typically be generated by a television station, or by any type of television medium, and may also be distributed on a multimedia content broadcast network, in addition to being made available on content servers in an OTT distribution system.

In the present description, the terms "media unit", "media object" or "media data object" as used interchangeably in the present description correspond to any data unit, data packet, or data set comprising media data and/or metadata (in particular metadata related to media data). For example, a media stream may be segmented into various media objects, such as media data chunks (for a stream supporting low latency), media data fragments, and media data segments. According to example embodiments of the present disclosure, chunks, fragments, and segments may be examples of media objects carrying media data and metadata related thereto. A hierarchical structure may in some embodiments be used, for example according to which chunks may be smaller media objects than fragments and segments, and a fragment may contain one or more chunks, while a segment may contain one or more fragments. In some embodiments, the chunks may correspond to the smallest used media object, in that it may not contain any other media objects. In the context of low latency, chunks may correspond to the smallest media object addressable by a request related to media data. That is, a request related to media data may request one or more chunks, and chunks may be the smallest media objects that may be requested through a request for media data. For example, a request for media data may request one or more segments, each segment being a larger media object than a chunk in that it may contain one or more chunks. For example, the segments, fragments, and/or chunks that are used in one or more embodiments may have a hierarchical structure, for example in the specific case of Common Media Application Format (CMAF) segments, CMAF fragments, and CMAF chunks.

In the present description, the terms "terminal", "user equipment", "reader", "reading device", "reading terminal" and "video reader" are used interchangeably to denote any type of device, implemented by one or more items of software, one or more items of hardware, or a combination or one or more items of software and one or more items of hardware, configured so as to use multimedia content distributed in accordance with a distribution protocol, for example a multi-screen distribution protocol, in particular by loading and by reading the content. The terms "client" and "video-reading client" are also used interchangeably to denote any type of device, software and/or hardware, or any function or set of functions, implemented by software and/or hardware within a device and configured so as to use multimedia content distributed in accordance with a distribution protocol, for example a multi-screen distribution protocol, in particular by loading the content from a server and by reading the content.

The terms "network" and "communication network" as used in the present description refer to one or more data links that may couple or connect possibly virtualized equipment so as to allow electronic data to be transported between computer systems and/or modules and/or other devices or electronic equipment, such as between a server and a client device or other types of devices, including between wireless devices that are coupled or connected via a wireless network, for example. A network may also include a mass memory for storing data, such as a NAS (network attached storage), a SAN (storage area network) or any other form of computer-readable or machine-readable medium, for example. A network may comprise, in full or in part, the Internet, one or more local area networks (LAN), one or more wide area networks (WAN), wired connections, wireless connections, cellular connections or any combination of these various networks. Similarly, subnetworks may use various architectures or conform with or be compatible with various protocols, and interoperate with larger networks. Various types of equipment may be used to make various architectures or various protocols interoperable. For example, a router may be used to provide a communication link or a data link between two LANs that would otherwise be separate and independent.

Video data is generally the subject of source coding aimed at compressing it in order to limit the resources required for its transmission and / or their storage. There are many encoding standards, such as those previously mentioned.

A video sequence may usually comprise a set of images (also called set of frames, or set of pictures). In conventional encoding schemes, the images of the video sequence to be encoded are typically considered according to an encoding sequence, and each is divided into sets of pixels which are also processed sequentially, for example starting at the top left and ending at the bottom right of each image.

The proposed method may advantageously be implemented on an improved computer system verification function, which may be implemented in software, hardware, or as a combination of software and hardware. In one or more embodiments, the proposed improved computer system verification function may be implemented as one or more software programs running on a server (e.g., a Linux server).

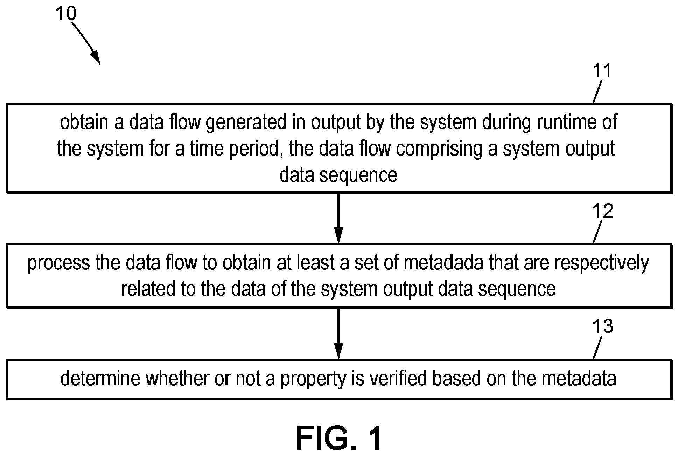

Figure 1 illustrates exemplary methods (10) for verification of a system according to one or more embodiments of the present subject disclosure.

A system to be verified may be configured for, while operating in runtime mode, generating output data, based on which properties related to system operations system may be verified according to embodiments of the present subject disclosure.

For example, the system may be designed and configured for video compression and/or video delivery, in which cases the output data may comprise one or more video streams.

In one or more embodiments, an output data flow, generated as output data by the system, may be obtained (11) during runtime (execution) of the system for a given time period (which may be indifferently referred to in the following as "monitoring runtime time period" or "runtime period"). For example, a copy of data outputted by the system during a given runtime period may be collected (e.g., in a verification data flow) for further processing according to the present disclosure.

Advantageously, the system to be analyzed (or validated) may therefore simply be operated in a standard runtime mode, that is, executed for a time period for verifying the system (e.g., by analyzing system runtime operations) without impacting such operations.

For example, a system to be analyzed (or validated) may be a video delivery node in a video delivery network which generates a video data flow (such as, for example video segments or video chunks) which is monitored according to embodiments of the present subject disclosure.

As another example, a system to be analyzed (or validated) may be a video compression unit which generates as output data a compressed video stream (or video flow) which is monitored according to embodiments of the present subject disclosure.

In some embodiments, the system to be analyzed (or validated) may be any system that manipulates multimedia streams and that outputs multimedia streams or multimedia data.

In one or more embodiments, a data flow may be comprised in the data output by the system, and the runtime period for collecting output data of the system may be chosen such that the data flow comprises a sequence of system output data.

The runtime period may be any suitable period of time, that is, any suitable time duration, during which data output by the system to be verified may be collected for further processing.

In one or more embodiments, the output data flow may comprise a system output data sequence. For example, the output data flow may comprise a sequence of data output by the system, such as, for example a sequence of image data, a sequence of video chunks, a sequence of video segments, a sequence of live manifests/playlists, etc.

Advantageously, the output data flow outputted by the system to be verified may be used according to the present disclosure as a model of the system operating in runtime, which allows using the formal verification framework for verifying one or more properties related to system operations. According to the present subject disclosure, based on the output data flow of a system, a model of the system may therefore be implicitly and automatically reconstructed at runtime, wherein each data of the sequence of output data may be considered a state of the system in the model, the transitions between two following data of the sequence respectively corresponding to transitions between states.

The present subject disclosure is not limited to any specific formal verification framework, and any suitable formal verification framework may be used for verifying one or more properties related to system operations based on the model of the system reconstructed at runtime according to embodiments of the present subject disclosure. In some embodiments, the model of the system reconstructed at runtime may comprise a set of structures and data collections which provide an internal representation of the model in the form of one or more automata.

In one or more embodiments, the output data flow may be processed to obtain (12) at least one set of metadata that are respectively related to data in the sequence of system output data.

For example, in some embodiments, the output data flow may be processed to obtain metadata that are comprised in the output data flow. Such metadata may include for example one or more DASH manifests or one or more HLS playlists, which are obtainable from the output data flow produced by a system which outputs DASH output data or HLS output data, respectively. In the exemplary case of a system which is configured to produce output data using the DASH format, the output data flow of the system may typically comprise DASH data (DASH segments, DASH fragments, and/or DASH chunks) with a manifest file.

In one or more embodiments, the output data flow may be processed to extract therefrom a manifest (e.g., a DASH manifest). The manifest may include a set of metadata which may be respectively related to multimedia segments (e.g., DASH segments) of a sequence of multimedia segments comprised in the output data flow. For example, in such embodiments, the output data flow may be parsed to extract therefrom a manifest (e.g., a DASH manifest), which may be processed to obtain the set of metadata that are respectively related to multimedia segments (e.g., DASH segments) outputted by the system during runtime execution.

In one or more embodiments, the output data flow may be processed to extract therefrom one or more playlists (e.g., HLS playlists). One or more of the playlists may include a set of metadata which may be respectively related to multimedia segments of a sequence of multimedia segments comprised in the output data flow. For example, in such embodiments, the output data flow may be parsed to extract therefrom one or more playlists (e.g., HLS playlists), which may be processed to obtain the set of metadata that are respectively related to multimedia segments outputted by the system during runtime execution.

In one or more embodiments, the system output data sequence comprised in the output data flow may comprise a sequence of N data blocks as follows: data1, data2, ..., dataN, wherein data1 may for example be the first data of the sequence outputted by the system, while dataN may be the last data outputted by the system during the monitoring runtime time period.

The output data flow may be processed (for example parsed) to extract therefrom a set of metadata that respectively correspond to the sequence of N data blocks: data1, data2, ..., and dataN. For example, the output data flow may be parsed to extract therefrom a set of metadata comprising metadata1, metadata2, ..., and metadataN, wherein metadata1 is related to data1, metadata2 is related to data2, ..., and metadataN is related to dataN.

In one or more embodiments, the set of metadata obtained from the data of the output data flow may be processed (e.g., analyzed) in order to determine (13) whether or not a property, e.g., a formal property, is verified. In some embodiments, verification of a property, e.g., by the output data flow to the extent the property is defined in relation to a property of the output data flow, may involve processing the set of metadata.

In one or more embodiments, the property may be related to data comprised in the output data flow (for example the property may pertain to data of the output data flow). Depending on the embodiment, the property may for example be related to one or more images (frames) of the output data flow, to a manifest comprised in the output data flow (e.g., a DASH manifest), or to a playlist comprised in the output data flow (e.g., a HLS playlist).

In one or more embodiments, the property may be related to data comprised in the output data flow and data inputted to the system during runtime execution (for example the property may pertain to data of the output data flow as well as data inputted to the system during runtime execution).

The proposed method therefore advantageously provides runtime verification of a system by parsing the output data flow of the system being executed during a time period and verification of formal properties related to system operations based on the parsed output data flow. A runtime verification tool that is configured to implement a proposed method according to the present subject disclosure may therefore advantageously be provided. Such runtime verification tool may advantageously use any suitable formal verification scheme for defining properties to be verified based on a model provided by the system output data sequence which is outputted by the system during execution for the time period.

In one or more embodiments, the system which has been verified using the proposed scheme may be updated (or corrected) if the verification has failed (determination that the property is not verified) to a new version of the system which is produced. In one or more embodiments, the system which has been verified using the proposed scheme may be confirmed if, to the contrary, the verification has succeeded (determination that the property is verified), possibly to a new version of the system which is produced.

In one or more embodiments, data of the system output data sequence may be successively generated by execution of the system over the time period based on input data provided as input to the system. For example, the system output data sequence may be a sequence of data packets that are generated one after the other by the system by processing input data received by the system or provided to the system being executed over the time period.

In one or more embodiments, the metadata may be determined based on data of the system output data sequence. For example, in some embodiments, the metadata may be extracted from the system output data sequence. For example, in some embodiments, a data flow outputted by the system during execution of the system over time period may be parsed for extracting therefrom data of the system output data sequence, and such system output data sequence may be further processed (for example parsed) for extracting therefrom the metadata.

In one or more embodiments, one or more properties to be verified may be defined as related only to data outputted by the system to be verified operating in runtime during a runtime period, such as, for example a data flow produced as output by the system operating in runtime during a runtime period.

In one or more embodiments, one or more properties to be verified may be defined as related to data outputted by the system to be verified operating in runtime during a runtime period, such as, for example a data flow produced as output by the system operating in runtime during a runtime period, and information related to a configuration of the system. In such embodiments, such properties may be verified based on the metadata extracted from the data outputted by the system and based on system configuration information.

In one or more embodiments, one or more properties to be verified may be defined as related to data outputted by the system to be verified operating in runtime during a runtime period, such as, for example a data flow produced as output by the system operating in runtime during a runtime period, and information related to a configuration of the system and/or data inputted to the system. In such embodiments, such properties may be verified based on the metadata extracted from the data outputted by the system, and based on system configuration information and/or the data inputted to the system during the runtime period.

Therefore, in some embodiments, the property may be related to the data outputted by the system being executed during the time period, such as, for example, the data of a data flow outputted by the system. For example, in some embodiments, the property may be defined based on a property of the data outputted by the system being executed during the time period, for example a property of the system output data sequence.

In some embodiments, the property may be related to a system configuration parameter. For example, the property may be defined based on a property of a system configuration parameter. For example, the property may be defined based on a combination of a property of a system configuration parameter and a property of the data outputted by the system being executed during the time period.

In some embodiments, the property may be related to a system feature. For example, the property may be defined based on a property of a system feature. For example, the property may be defined based on a combination of a property of the data outputted by the system being executed during the time period, and one or more of a property of a system feature and a property of a system configuration parameter.

In some embodiments, the property may be related to data input to the system being executed during the time period. For example, the property may be defined based on a property of data input to the system being executed during the time period. For example, the property may be defined based on a combination of a property of the data outputted by the system being executed during the time period and one or more of a property of data input to the system being executed during the time period, a property of a system feature, and a property of a system configuration parameter.

Examples of properties are provided below for the non-limiting exemplary case of a system to be verified which is configured for multimedia data processing and produces in output one or more multimedia data flows comprising sequences of images.

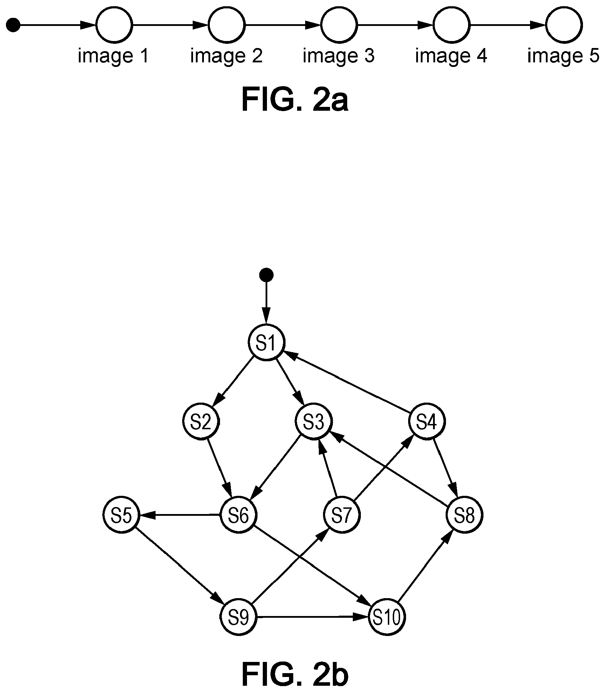

In one or more embodiments, the system may be configured for multimedia data processing, and for producing in output one or more multimedia data flows, based on which the system output data sequence may be obtained. The system output data sequence may comprise an output sequence of images, such as the exemplary sequence of images illustrated by Fig. 2a, generated as output data by the system being executed during the time period using input data. In some embodiments, the input data provided to the system during execution may comprise an input sequence of images.

In such embodiments, the metadata which are obtained from the output multimedia data flow may be respectively related to images of the output sequence of images.

For example, the system to be verified may comprise a video source encoder, a video source decoder, a video transcoder, or a video codec configured for transcoding, encoding and/or decoding images (or frames) of input video data, such as, for example a video encoder and/or decoder compliant with any of the H.261, MPEG-1 Part 2, H.262, MPEG-2 Part 2, Alliance for Open Media (AOM) AV1, H.264/AVC, H.265/HEVC, MPEG-4 Part 2, and SHVC (Scalable HEVC) specifications or standards, whether in their existing versions and/or their evolutions.

As another example, the system to be verified may comprise a multimedia data delivery unit, such as for example a multimedia data delivery server, or a multimedia delivery node of a Content Delivery Network (CDN).

As shown on Fig. 2a, in some embodiments, the sequence of system output data may comprise data respectively corresponding to a sequence of N images: image 1, image 2, ..., image N, N being for example equal to 5 as illustrated on Fig. 2a.

In such embodiments, the system output data sequence outputted by the system during the runtime period may be obtained by parsing the output data flow outputted by the system during the runtime period. For example, the sequence of N images may be generated using a video parser operating on a multimedia data flow outputted by a system to be verified.

The sequence of N images may be used as a partial model of the system that generated the sequence during the runtime time period, each image corresponding to a state of the system entered into during the runtime time period, and a transition of the system to one state to another state corresponding to the transition from one image to the following image in the sequence.

In some embodiments, metadata respectively corresponding to each image of the sequence, that is, each state of the model, may be obtained, for example by parsing the output data flow of the system.

For example, in some embodiments, the metadata for an image (for one state of the model) may comprise one or more parameters of the image, such as, for example, one or more of the frame rate, the video codec using for encoding the image, dimensions, pixel size, presentation time, image which is black or not, image which is a duplicate of the preceding image in the sequence or not, etc.

As a comparison, a conventional model-checker of the system would explore all possible states of the system based on a pre-generated model of the system that is provided as input to the model-checker. For a moderately complex system, the state space of the system, that is, the set of all possible configurations of the system, may rapidly reach a very large number of states (millions of states, billions of states or even more). Fig. 2b shows a simplified example of state space. The conventional model-checker will typically be configured to find among all these states a counter-example that refutes a given property. In case where at least one such counter-example is found, the property is declared violated. To the contrary, if no such counter-example is found, the property is declared verified.

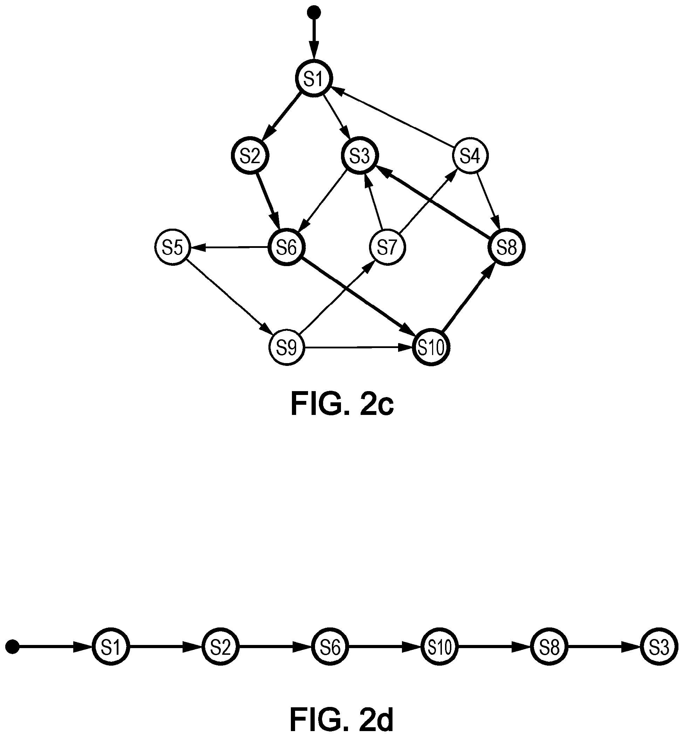

An execution of the system would correspond to a path within the state space (among all the possible paths in the state space), as for example illustrated by Fig. 2c for the state space of Fig. 2b. For a state space of the system to be verified, a path in the state space would therefore correspond to an execution of the system given input data inputted to the system and a system configuration.

The exemplary execution of the system shown on Fig. 2c can also be represented as a linear graph, as shown on Fig. 2d.

A similar linear graph can be obtained for a given runtime execution of the system based on data output by the system, without requiring a pre-generated model of the system, as illustrated by the example shown on Fig. 2a.

As discussed above, any suitable formal verification framework may be used with the runtime model of the system generated with using the output data of the system, such as illustrated by Fig. 2a, according to embodiments of the present subject disclosure.

For example, in one or more embodiments, the system to be verified may be configured for outputting transport stream (TS) video flows. A TS flow outputted by the system may comprise a sequence of images, and metadata respectively corresponding to images of the sequence. In some embodiments, a TS flow outputted by the system during a given runtime period may be parsed in order to extract therefrom the metadata respectively corresponding to the sequence of images of the TS flow. Based on the metadata (e.g., by analyzing the metadata), it may be determined whether one or more properties are verified.

In such embodiments, a formal verification framework may be defined through the definition of properties comprised in the framework. Certain key-words may also be defined for purposes of expressing various properties. For example, the word "globally" may be defined to be interpreted according to a suitable modal temporal logic. For example, the word "globally" may be defined to be interpreted according to the Linear Temporal Logic (LTL), as meaning: "for all states of the model".

For example, in some embodiments, properties related to images of a Transport Stream (TS) flow outputted at runtime by the system may be defined.

For example, a property related to the detection of black images in the TS flow may be defined as follows:
"Globally, the flow does not include any black image."

Variants of the above definition may be used in embodiments of the present subject disclosure, such as for example the following ones:
"Globally, the flow does not include more than one black image,"
"Globally, the flow does not include more than two black images,"
"Globally, the flow does not include more than N black images,"
"Globally, the flow does not include more than two consecutive black images,"
"Globally, the flow does not include more than N consecutive black images,"
"Globally, the flow does not include more than one black image per second,"
"Globally, the flow does not include more than one black image per minute," and
"Globally, the flow does not include more than three black images per hour."

The above variants of a property related to the detection of black images provide examples of a property may, in some embodiments, depend only on the data outputted (e.g., a TS flow) by the system to be verified at runtime.

In some embodiments, other properties related to the detection of black images, which depend on the data outputted (e.g., a TS flow) by the system to be verified at runtime as well as on the configuration of such system, may also be used, such as, for example, the two following variants:
"If the system is not in maintenance, globally the flow does not include any black image," and
"If the system is in maintenance, globally the flow includes only black images."

As another example, in some embodiments, properties related to a TS flow outputted at runtime by the system may be defined.

The following provides exemplary properties related to a TS output flow that may be verified based on metadata, for example of images of the flow or as the case may be of TS packets of the flow (e.g., the "continuity counter" (CC) according to embodiments of the present subject disclosure:
"Globally, the flow does not include two consecutive identical images,"
"Globally, there is no duplicate or gap in the CC," the CC being the "continuity counter,"
"Globally, the pixel resolution of the flow is 720p,"
"Globally, the pixel resolution of the flow is identical to that in the system configuration,"
"Globally, the framerate is 50 fps," and
"Globally, there is no discontinuity in the PTS," the PTS being the Presentation TimeStamp.

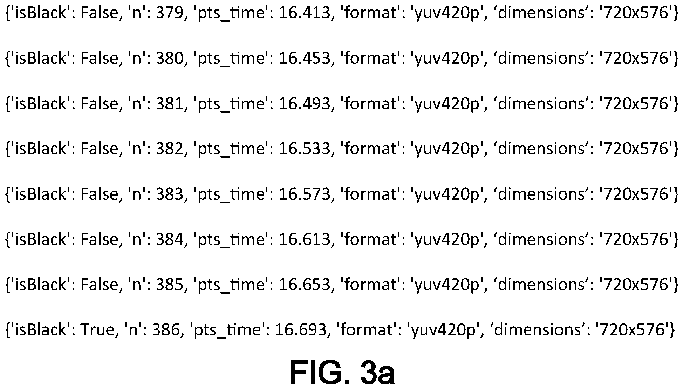

Figure 3a shows an exemplary result log of a verification system configured for detecting a property in a TS flow outputted by a system at runtime execution according to one or more embodiments.

In the example illustrated by Fig. 3a, the property is related to detecting black images in the TS flow.

In some embodiments, the parser used for parsing the TS flow may be any suitable parsing tool.

Fig. 3a shows an example in which the verification system is configured for detecting whether a property P1 (e.g., "[] !framelsBlack") is "true" or "false" for images of a TS flow outputted by a video system using the metadata "isBlack". Upon finding a block image in the TS flow, the property P1 is found to be "true" for the relevant image based on the metadata "isBlack" obtained for the image.

As shown on Fig. 3a, the following information may be generated as result by the verification system configured for testing the property P1 for images (frames) in a TS flow outputted by a system to be verified during runtime execution:
"isBlack" is a metadata that indicates whether or not an image is black (TRUE if the image is black, FALSE if the image is not black);
"pts_time" is the "presentation time offset" of the image, that is, a timestamp at which the image is to be displayed by a player;
"n" is the number of the image in a sequence of images;
"fmt" indicates the pixel coding format used for the image; and
"dimensions" indicates the image dimensions (e.g., 720x576 pixels).

As another example, in some embodiments, properties related to playlist data, such as, for example, a HLS playlist, outputted at runtime by the system may be defined.

The following provides exemplary properties related to a HLS playlist that may be verified based on metadata of data of the output flow (e.g., comprised in the HLS playlists) according to embodiments of the present subject disclosure:
"All video MUST be encoded using H.264/AVC or HEVC/H.265,"
"The LANGUAGE attribute MUST be included in every EXT-X-MEDIA tag that doesn't have TYPE=VIDEO," and
"Frame rates above 60 fps SHALL NOT be used."

As another example, in some embodiments, properties related to a manifest (or an OTT playlist), such as, for example, a DASH or MPEG-DASH manifest, outputted at runtime by the system may be defined.

The following provides exemplary properties related to a DASH manifest that may be verified based on metadata of data of the output flow (e.g., comprised in the DASH manifest) according to embodiments of the present subject disclosure:
"If a Period contains multiple Video Adaptation Sets [...] then at least one Adaptation Set shall contain a Role element <Role schemeldUri="urn:mpeg:dash:role:2011" value="main"> and each Adaptation Set containing such a Role element shall provide perceptually equivalent media streams,"
"For any Video Adaptation Sets [...] the following attributes shall be present:
@maxWidth (or @width if all Representations have the same width)
@maxHeight (or @height if all Representations have the same height)
@maxFrameRate (or @frameRate if all Representations have the same frame rate)"
@par," and
"For any Audio Adaptation Sets as defined in 3.2.13 the language attribute shall be present."

Compliance to specifications of a standard set by a Standard Setting Organization (SSO), or to an industry standard, such as HLS or DASH, may therefore be verified in embodiments using the scheme proposed in the present subject disclosure.

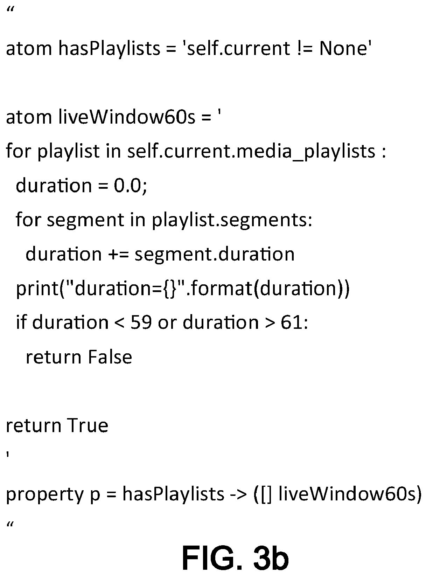

Fig. 3b shows an exemplary property that may be verified based on an exemplary HLS playlist according to one or more embodiments.

Shown on Fig. 3b is the exemplary property defined as "Globally, in each media playlist, the sum of all segment durations is approximately equal to 60 seconds" in LTL format. In embodiments in which the system to be verified that produces the output flow is configured with a live window of duration 60 seconds, the duration of the live window would typically correspond to the duration of the media content referenced by each HLS media playlist.

In one or more embodiments, a verification system may comprise a parser engine configured for parsing a playlist (such as, for example, a HLS playlist) comprised in data output by the system to be verified during runtime execution for a given duration. In some embodiments, the parser engine may be configured to return a data object, e.g., an Abstract Syntax Tree (AST) data object, which includes metadata of the parsed playlist. For example, the playlist may be a text file, and the parser engine may process the playlist to read information contained in the text file, in particular metadata that are relevant for verifying the property. As a result of processing the playlist file, the parser may generate a data object comprising data representing the playlist and comprising metadata of the playlist file, including that relevant for verifying the property. In some embodiments, the generated data object may be stored in memory.

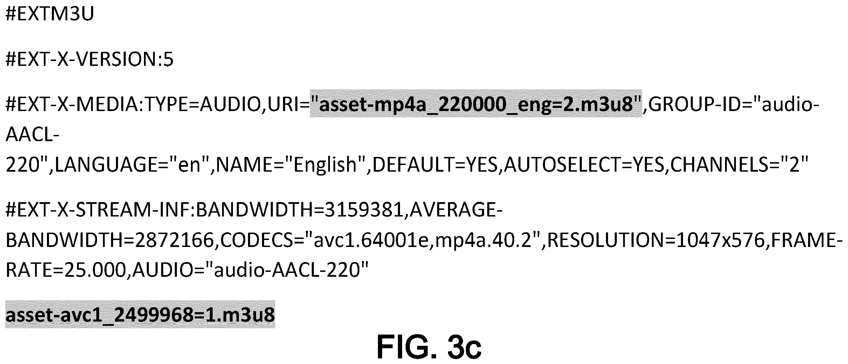

Fig. 3c shows a text file that corresponds to an exemplary HLS master playlist based on which a data object "self.playlist" may be generated to verify the property of Fig. 3b according to embodiments of the present disclosure.

As illustrated by Fig. 3c, the parsed HLS master playlist may comprise metadata comprised in the parsed playlist that are relevant for verifying the exemplary property shown on Fig. 3b.

For example, the data object generated by the parser of Fig. 3c shows that a master playlist may comprise two media playlists: a video playlist ("asset-avc1_2499968+1.m3u8"), and an audio playlist ("asset-mp4a_220000_eng=2.m3u8"). Objects corresponding to these playlists may be stored in memory, for instance in a "self.current.media_playlists" data object.

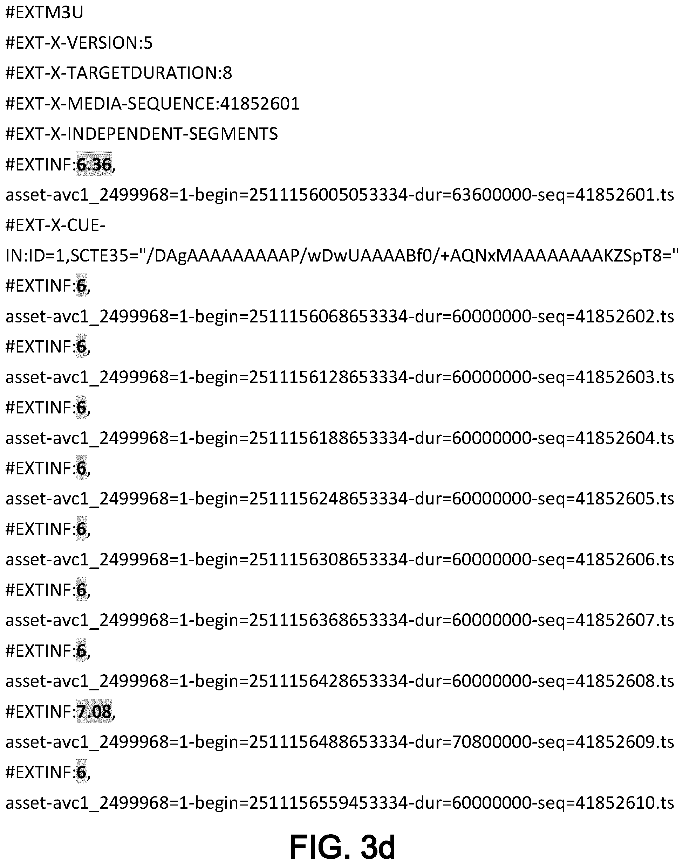

Fig. 3d shows a text file that corresponds to the exemplary HLS video playlist based on which a data object may be generated to verify the property of Fig. 3b according to embodiments of the present disclosure.

As shown in Fig. 3d, the parsed video playlist may comprise the following metadata:
- A "segment" attribute which comprises a list of segments;
- Each segment may have the following attributes:
   ∘ "duration": duration of the segment;
   ∘ "uri": name of the segment (e.g., file name);
   ∘ "key": the key used for deciphering the segment;
   ∘ "cue_in": information linked to the CUE-IN, which correspond to information related to the end of an advertisement.

With respect to the property of Fig. 3b, a sum of the respective durations of each of the segments may be determined, the duration of each segment being obtained through the "duration" attribute, and it may be verified that the sum does not exceed 60 seconds (possibly within a margin, such as for example a 1 s margin).

In one or more embodiments, the playlist file(s) outputted by the system to be verified during runtime execution may be parsed to generate a data object comprising metadata comprised in the playlist file(s), and the data object may be further processed to verify a property using the metadata comprised therein that are relevant with respect to the property.

Other exemplary properties related to a DASH manifest that may be verified based on metadata of data of the output flow (e.g., comprised in the DASH manifest) according to embodiments of the present subject disclosure may be defined as follows:
"Globally, the DASH manifest does not include any empty period,"
"Globally, the video and the audio are aligned at the beginning of each period,"
"Globally, the gap between the start time of the audio track and the start time of the video track does not exceed one segment,"
"Globally, the offset between the start time of the audio track and the start time of the video track does not exceed one segment,"
"Globally, the manifest does not include any period of duration less than 2 seconds,"
"If advertisement insertion and encryption are not activated in the system configuration, the manifest includes only one period," and
"Globally, the sum of the period durations is equal to the duration of the live window configured for the system."

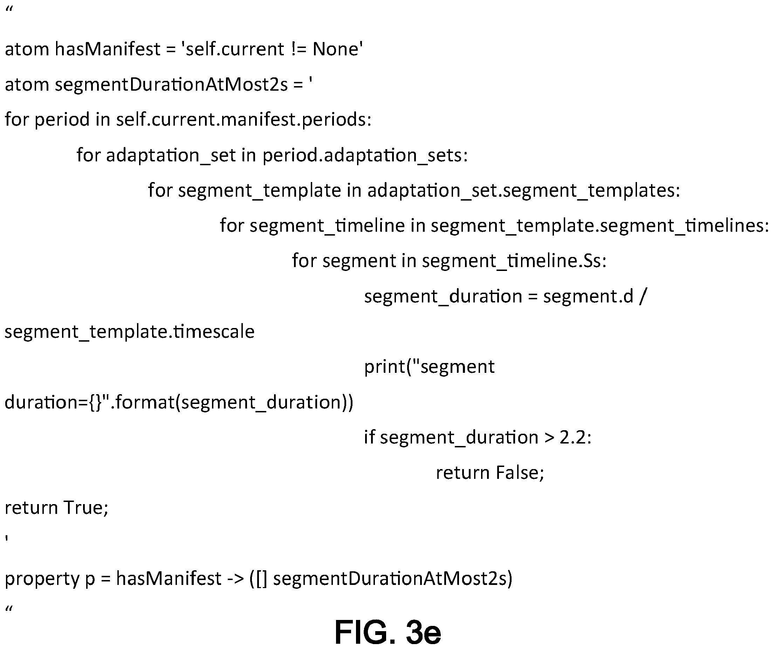

Fig. 3e shows an exemplary property that may be verified based on an exemplary DASH manifest file according to one or more embodiments.

Shown on Fig. 3e is the exemplary property defined as "Globally, each segment has a duration inferior to 2.2 seconds" in LTL format.

In one or more embodiments, a verification system may comprise a parser engine configured for parsing a manifest (such as, for example, a DASH manifest) comprised in data output by the system to be verified during runtime execution for a given duration. In some embodiments, the parser engine may be configured to return a data object, e.g., an Abstract Syntax Tree (AST) data object, which includes metadata of the parsed manifest. For example, the manifest may be a text file, and the parser engine may process the manifest to read information contained in the text file, in particular metadata that are relevant for verifying the property. As a result of processing the manifest file, the parser may generate a data object comprising data representing the manifest and comprising metadata of the manifest file, including that relevant for verifying the property. In some embodiments, the generated data object may be stored in memory.

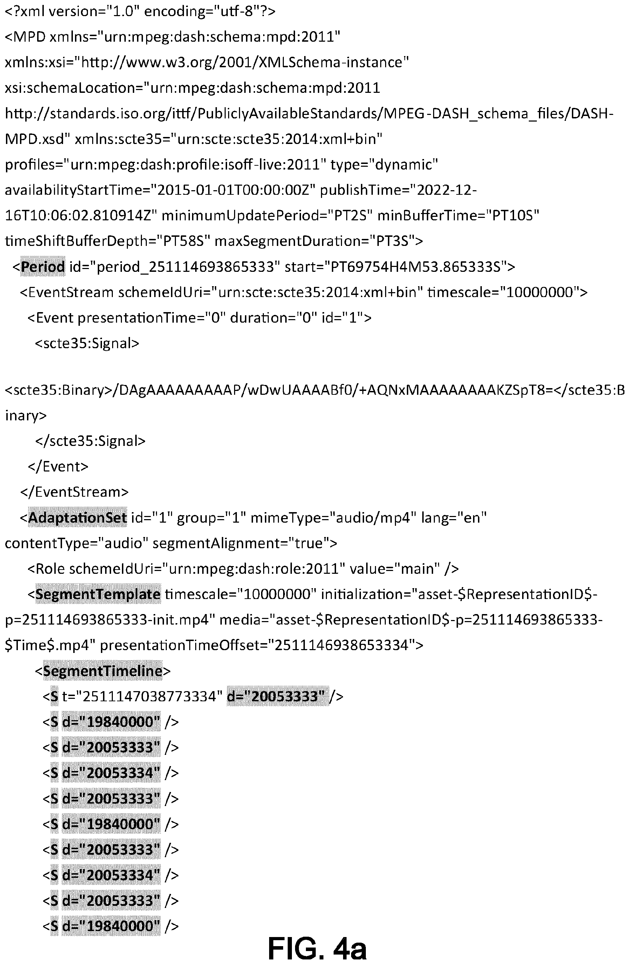

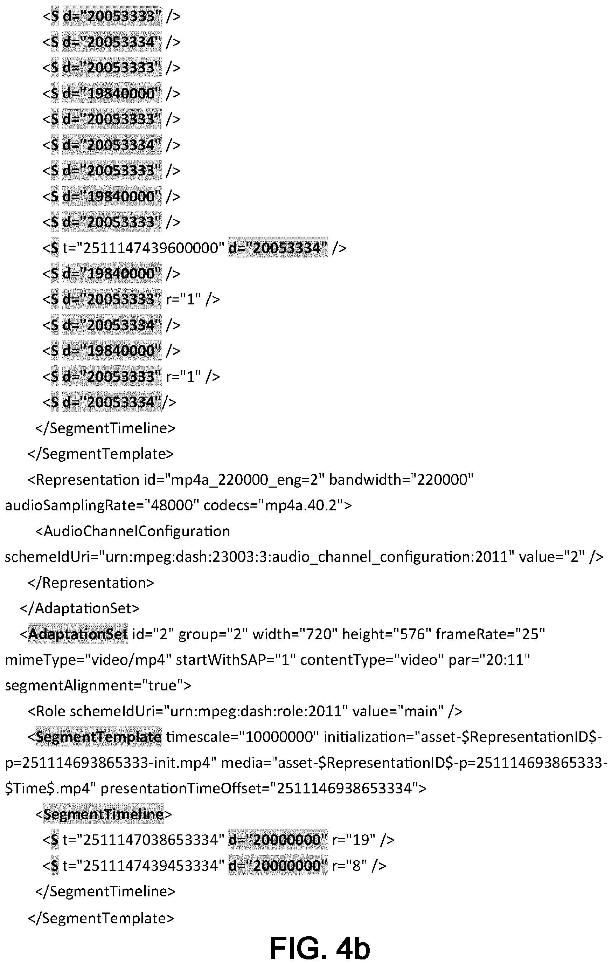

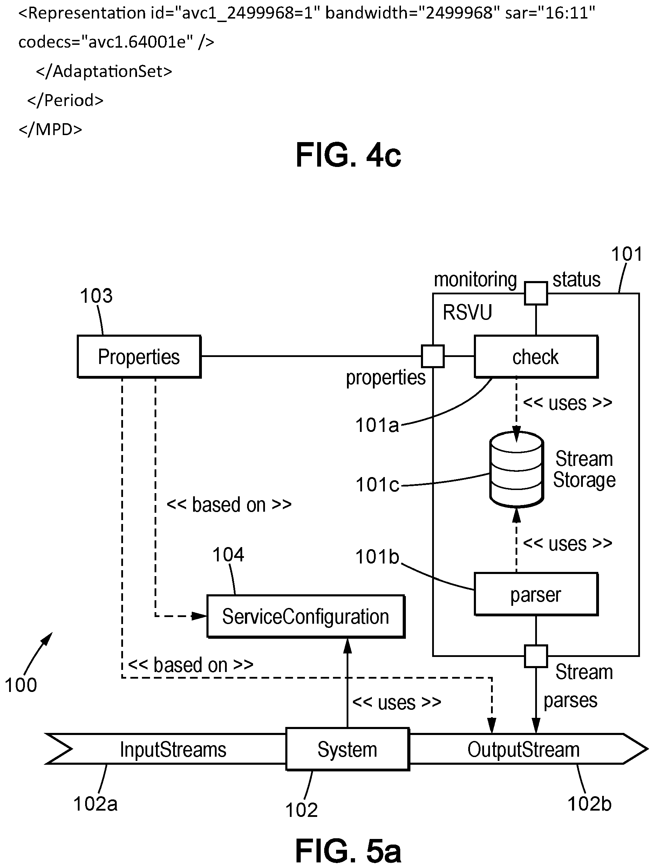

Fig. 4 (spanning 3 parts, figs. 4a, 4b and 4c) shows an exemplary DASH manifest based on which a data object may be generated to verify the property of Fig. 3e according to embodiments of the present disclosure.

As illustrated by Fig. 4, the parsed DASH manifest may comprise metadata that are relevant for verifying the exemplary property shown on Fig. 3e. The data object generated by parsing the DASH manifest may comprise data corresponding to such metadata that are relevant for verifying the property.

For example, the parsed DASH manifest may comprise the following metadata:
- A "self.current.manifest.periods" attribute which comprises a list of periods. Each period has an identifier "id" attribute, and a starting time "start" attribute;
- Each period has an "adaptation_sets" attribute which comprises a list of adaptation sets;
- Each adaptation set has a "segment_templates" attribute which comprises a list of segment templates;
- Each segment template has a "segment_timelines" attribute which comprises a list of segment timelines;
- Each segment timeline has a "Ss" attribute which comprises the following attributes:
   ∘ "t": the starting time of the segment;
   ∘ "d": the duration of the segment;
   ∘ "r" ("repeat" attribute): For example, if "r=2", there is a sequence of 3 segments of the same duration (the segment for which the starting time is indicated by the "t" attribute, and two other segments with the same duration).

With respect to the property of Fig. 3e, the duration "d" attribute in the data object may be used by the verification system in one or more embodiments in order to verify that such duration does not exceed 2 seconds (possibly within a margin, such as for example a 200ms margin).

In one or more embodiments, the manifest file outputted by the system to be verified during runtime execution may be parsed to generate a data object comprising metadata comprised in the manifest file, and the data object may be further processed to verify a property using the metadata comprised therein that are relevant with respect to the property.

Figure 5a is a block diagram that illustrates an exemplary architecture of a runtime system verification unit according to one or more embodiments of the present subject disclosure.

Shown on Fig. 5a is a system verification environment 100 which comprises a verification unit (also referred to as "runtime system verification unit", or RSVU in the following) 101 and a system to be verified 102. The architecture of the exemplary verification unit 101 may be designed to perform runtime verification on multimedia streams produced by the system 102 to check correctness of their behavior.

The system to be verified 102, which may be any system that manipulates multimedia streams, may be a product to be validated, and may possibly be in use on site. In some embodiments, the system 102 may take as input data one or more input streams 102a ("InputStreams"), which may be processed and possibly grouped together by the system during execution to produce an output stream 102b ("OutputStream") with various characteristics (e.g., framerate, codec, etc.). For example, the environment 100 may be set up and configured for verification of a live transcoder 102 of multimedia streams based on the output streams produced by the transcoder 102.

In one or more embodiments, one or more monitorable properties 103 may be specified or defined in relation to a combination of properties of the content of the output stream produced by the system 102 and properties related to the configuration of the system 102 (defined using configuration parameters 104 ("ServiceConfiguration"), for example a configuration parameter for configuring a service (e.g., a TV channel)), for performing formal verification of the properties 103 by the verification unit 101.

In some embodiments, the verification unit 101 may comprise a check core engine 101a, a parser engine 101b, and a memory (e.g., a database) 101c ("StreamStorage"), so as to be configured for formally verifying the properties 103 at runtime of the system 102. The parser engine 101b may be configured for parsing the multimedia stream 102b and extracting therefrom metadata related to images of the multimedia stream 102b, and for storing the parsed metadata in the memory 101c. The check core engine 101a may be configured for performing runtime verification by checking if the specified properties 103 hold on the multimedia stream 102b.

Advantageously, the parser engine 101b and the check core engine 101a may be operatively coupled through the memory 101c. Besides the analysis of multimedia files, the illustrated architecture allows analyzing live streams (streams that cannot be stopped or replayed), without any delay or latency incurred by the verification unit 101 in the distribution of the output stream 102b. Positioning the memory 101c in between the parser engine 101b and the check core engine 101a, as illustrated by Fig. 5a, advantageously allows avoiding the missing of some metadata in the output stream 102b each time the check core engine 101a stops for instance to analyze a property failure.

In some embodiments, data kept in the memory 101c for a predefined period may be discarded in order to avoid a memory overflow, as for long term monitoring of the system 102 the memory 101c would not have the capacity to store the entire explored state space of the system 102. Therefore, in such embodiments, some oldest stream metadata stored in the memory 101c may be gradually removed from the memory 101c over time.

In one or more embodiments, the properties that are defined for verification of the system 102 may reflect compliance with standard specifications implemented by the system 102, and/or client requests or needs. For example, a property R1 related to a characteristic of the output stream 102b may be defined as follows: "Globally, the output stream does not contain black frames." Further, a property R2 related to a client need may be defined as follows: "When blackout is not enabled on the service, globally the output stream does not contain black frames."

Black frames detection is a usual V&V task as it is a common behavior for video encoders to output black frames in case of failure. While R1 only focuses on black frame detection to get better quality of service, R2 also takes into account the service configuration. Indeed, clients can deliberately blackout a channel for maintenance operations for example. In this case, it is a normal behavior for the encoder to output black frames.

In one or more embodiments, a language (referred to as "monitoring language" in the following) may be designed for specifying properties to be verified according to the present subject disclosure.

In some embodiments, the monitoring language may be designed to enable defining formal properties based on atomic propositions (which may be referred to in the following as "atoms"). Referring to the verification environment 100 of Fig. 5a, in some embodiments, the atoms may be boolean expressions written in Python language that depend on stream metadata and/or on the content of the service configuration. To access these data, atom predicates may rely on two keywords: "self" and "serviceConfig".

The "self" keyword may be used as the parser instance containing all metadata of the stream in the current execution state. Typically, in embodiments wherein the parser engine 101b implements a frame by frame parser, the execution state may be a frame and the parser engine 101b may be configured to access one or more of the characteristics of a given frame (e.g., codec, dimensions). For example, in some embodiments, the parser engine 101b may typically be a video frame parser configured for parsing metadata related to characteristics of a given frame that are then used for determining whether or not a property is verified according to embodiments of the proposed scheme.

The « serviceConfig » keyword may be used with respect to the service configuration (which may typically be specified using the JSON language) running on the system 102 for the stream currently being parsed. In some embodiments, the verification unit 101 may be configured to collect the service configuration 105 before the start of the runtime verification, possibly only once before such start.

In some embodiments, the monitoring language may be designed to allow writing formal properties as LTL (Linear Temporal Logic) formulas, based on the atomic propositions. Atoms may be linked together using first order logic operators (e.g., and, or, not) and temporal modalities of LTL (e.g., [] (globally)). In some embodiments, the LTL formulas may be translated into Büchi automata.

In order to be formally verified at runtime, properties defined in the monitoring language may in some embodiments belong to the class of monitorable properties, which includes all safety properties. To be monitorable, properties may be defined to satisfy two constraints: completeness and determinism. The verification engine 101 may be configured to check these constraints at runtime by ensuring that it is always possible to execute one and only one step on the property automaton at each time.

With respect to the above two property examples R1 and R2, two atoms may be used: A "frameIsBlack" atom may be used to determine whether the current frame is black while a "blackout" atom may be related to the service configuration to determine whether blackout is deliberately enabled. These atoms may for example be defined in the monitoring language as:

```
atom frameIsBlack = 'self.isBlack'
```

and

```
atom blackout =
        'serviceConfig["GlobalConfiguration"]["EnableBlackout"]'
```

Based on these atoms, the two properties corresponding to the above exemplary requirements R1 and R2 may be respectively specified in the monitoring language using the following LTL formulas:

```
        property P1 = [] (not frameIsBlack)
```

and

```
        property P2 = [] ((not blackout) -> (not frameIsBlack))
```

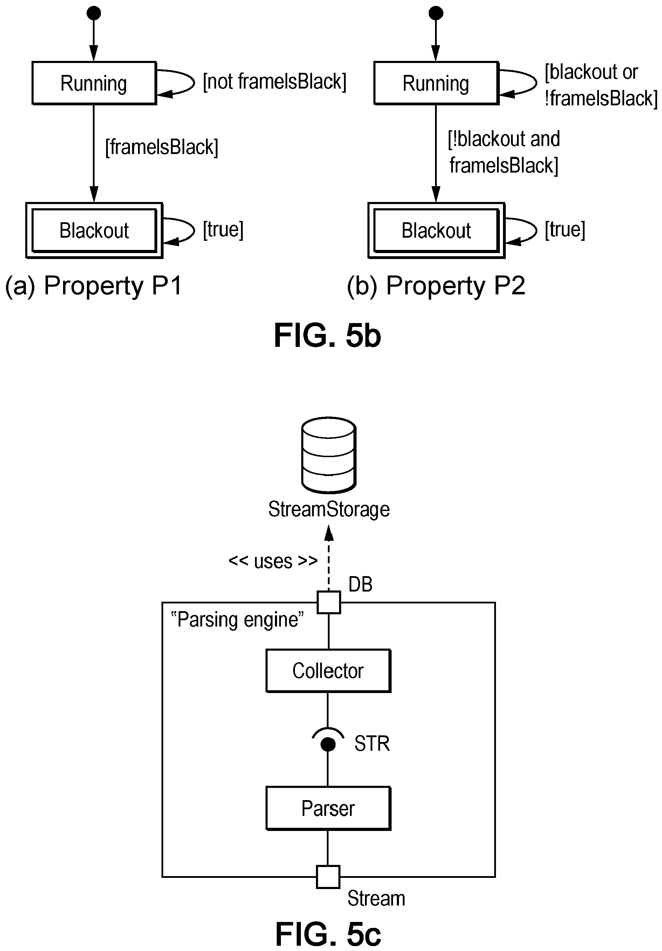

Figure 5b illustrates these properties as Büchi automata. Each automaton stays in the Running state if no black frame has been encountered yet and goes into the Blackout state when the first black frame is discovered. This last state is an acceptance state of the Büchi automaton, meaning that the property is violated when this state is reached.

In one or more embodiments, the software architecture of a runtime system verification unit configured for performing the verification of properties written in the monitoring language according to embodiments of the present subject disclosure may comprise one or more Parsing engines and a Core engine. In some embodiments, the Parsing engine(s) and the Core engine may rely on a suitable interface (e.g., the Semantic Transition Relation (STR) interface) to control the execution of the property automaton and/or the execution of the multimedia stream, which may also be seen as an automaton (e.g., one state for each frame). In some embodiments, the interface may provide three functions: a so-called "initial" function that obtains the initial state of the automaton, a so-called "actions" function that obtains the available execution steps from a given state, and a so-called "execute" function that executes a step from a given state and returns the target state. As configured with these three functions, the interface may advantageously provide a semantic point of view on the behavior of the computer system to be verified through its output stream.

Figure 5c illustrates an exemplary architecture of a Parsing engine (which may be implemented in the parser 101b of Fig. 5a) which is configured for parsing the streams and forwarding metadata to memory (such as the StreamStorage database shown on Fig. 5a). In some embodiments, the Parsing engine may comprise a Collector engine operatively coupled with a Parser engine. Referring back to Fig. 5a with respect to embodiments where the Parsing engine shown on Fig. 5c is implemented in the parser 101b of the runtime system verification unit 101, different parser engines may for example be used as the parser 101b of the runtime system verification unit 101. For OTT, an HLS parser engine may be configured to parse HLS playlists, a DASH parser engine may be configured to parse DASH manifests. For transport streams, a parser engine may be configured to operate (including extract metadata) at packet level, and a MPEG parser engine may be configured to operate (including extract metadata) at the frame level. When a stream has been parsed by the parser engine, metadata obtained by the parser engine may be sent to the Collector engine shown on Fig. 5c via the interface (e.g., the STR interface) and stored into a StreamStorage database (e.g., the StreamStorage database of Fig. 5a).

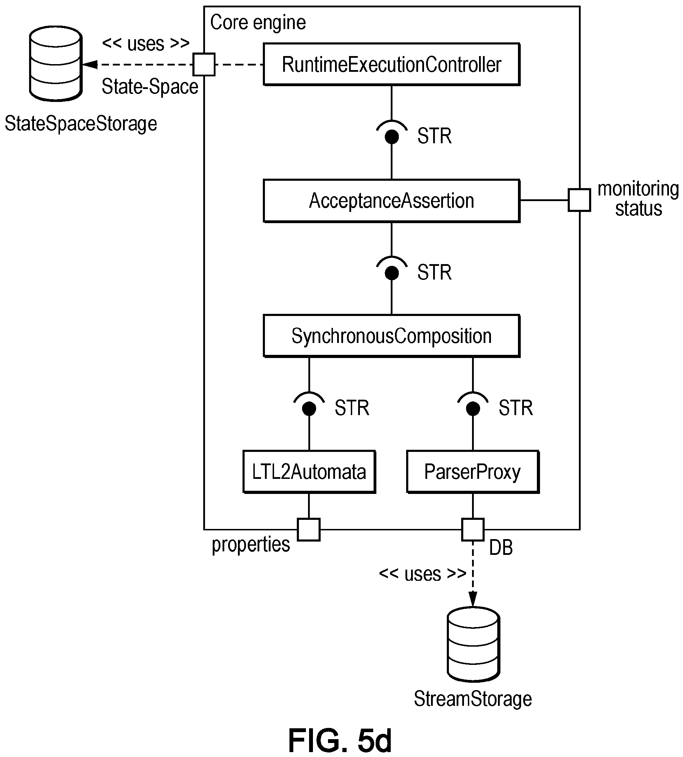

Figure 5d illustrates an exemplary architecture of a Core engine (which may be implemented in the check core engine 101a of Fig. 5a), which comprises a Runtime Execution Controller engine, an Acceptance Assertion engine, a Synchronous Composition engine, one or more LTL2Automata engines, and a Parser Proxy engine. In some embodiments, the Parser Proxy engine may be configured for fetching metadata in memory (such as the StreamStorage database shown on Fig. 5a), and expose such metadata to its interface (e.g., its STR interface). The LTL2Automata engines may be configured to transform LTL formulas into Buchi automata. The Synchronous Composition may be coupled to the LTL2Automata engines and to the Parser Proxy engine, for example through their respective STR interfaces. The Synchronous Composition engine may be configured for, based on data received from the Parser Proxy engine and the LTL2Automata engines, synchronously generating the property automaton with the stream automaton. In some embodiments, the property automaton may be generated to observe the execution of the stream automaton, and make one step each time the stream automaton makes one step. Data generated by the Synchronous Composition engine may be forwarded to the Acceptance Assertion engine, which may be configured for outputting the monitoring status of each property. In some embodiments, the Runtime Execution Controller engine may comprise one or more processors coupled with memory, and may be configured to control the execution of the Core engine. In some embodiments, the Runtime Execution Controller engine may further be configured to push the explored state-space into memory (e.g., the StateSpaceStorage database shown in Fig. 5d), for use should a later offline analysis be needed.

In embodiments where the Core engine is implemented in a check core engine 101a of a RSVU 101 as illustrated by Fig. 5a, the Runtime Execution Controller engine may be configured to control the execution of the entire RSVU 101.

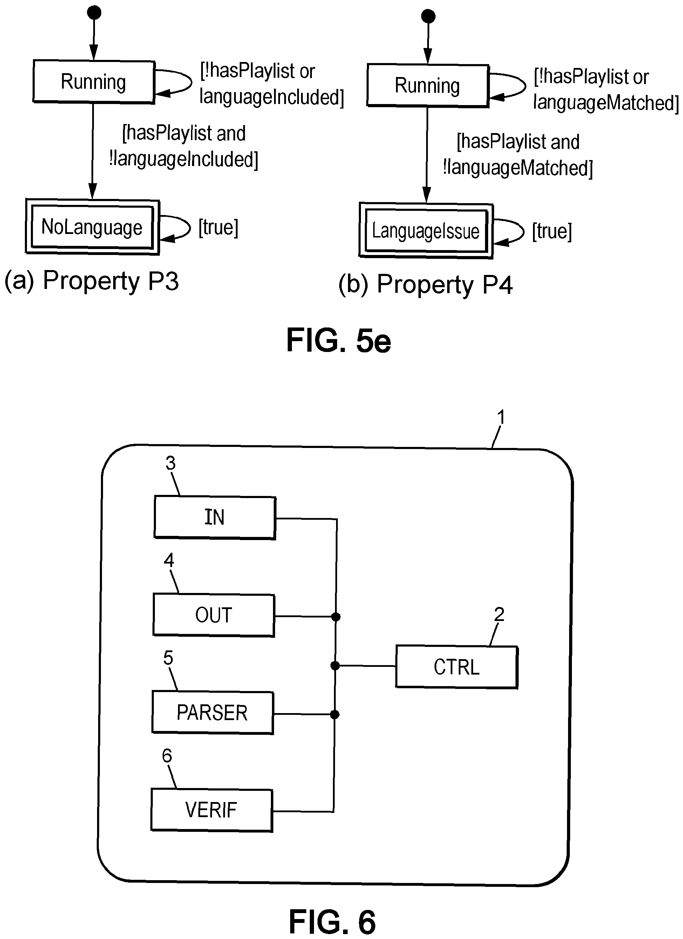

In some embodiments, a Runtime System Verification Unit (RSVU), such as the RSVU illustrated by Figs 5a, 5c and 5d, may be implemented in Python and applied to real-life examples to perform runtime verification. As discussed above, properties P1 and P2 may be verified on different streams: TS captures but also live streams of the French television. When no black frame has been encountered, the monitoring status of both properties is "still verified". When the first black frame is encountered, the monitoring status turns to "rejected" for both P1 and P2. Another embodiment may be made with a RSVU to check the correctness of the HLS output of a live video distribution apparatus. In this regard, properties may be defined with respect to constraints to improve interoperability and compatibility of HLS streams with devices. For example, constraints including a requirement defined as "The LANGUAGE attribute MUST be included in every EXTX-MEDIA tag that doesn't have TYPE=VIDEO." may be used. Based on this requirement, two LTL formulas (or corresponding Buchi automata are illustrated by Fig. 5e) may be defined as:

```
        property P3 = [] (hasPlaylist -> languagelncluded)
        property P4 = [] (hasPlaylist -> languageMatched)
```

Both properties may for example be based on the following three atoms:
hasPlaylist, which checks that the HLS Parser engine effectively obtains an HLS playlist,
languageIncluded, which checks that the LANGUAGE attribute is included for all non-video medias, and
languageMatched, which checks that the LANGUAGE attribute is included and matched the language defined in the service configuration of the live video distribution apparatus. As defined, P3 verifies the 8.10 requirement of the HTTP Live Streaming (HLS) Authoring Specification for Apple Devices (as specified for example at the following URL:
   https://developer.apple.com/documentation/http live streaming/http live streaming his authoring specification for apple devices) while P4 is a more refined property which may be defined based on the configuration of the live video distribution apparatus.

Fig. 6 illustrates an exemplary apparatus or unit 1 configured to serve as an computer system verification unit, in accordance with embodiments of the present subject disclosure.

The apparatus 1, which may comprise one or more computers, includes a control engine, an input interface engine, an output interface engine, a memory, a parser engine, and a verification engine.

In one or more embodiments, all of the input interface engine, output interface engine, memory, parsing engine, and verification engine may be operatively coupled with one another through the control engine.

In some embodiments, the input interface engine is configured to perform various aspects of embodiments of one or more of the proposed methods described herein, such as without limitation related to receiving properties to be verified for use by the formal verification engine, and receiving a copy of an output data flow outputted by the system to be verified being executed during a time period, or data parsed from an output data flow outputted by the system to be verified being executed during a time period.

In some embodiments, the parser engine is configured to perform various aspects of embodiments of one or more of the proposed methods described herein, such as without limitation related to parsing an output data flow outputted by the system to be verified being executed during a time period, for further processing by the apparatus 1 according to embodiments of the present subject disclosure. For example, the parser engine may be configured for parsing the data outputted by the system to be verified being executed during a time period, and extract therefrom a system output data sequence and a set of metadata respectively related to the data of the system output data sequence.

Data generated by the parser engine may be stored in the memory of the apparatus.

In some embodiments, the verification engine is configured to perform various aspects of embodiments of one or more of the proposed methods described herein, such as without limitation related to performing verification of properties based on the metadata stored in memories, using predefined properties that are received by the apparatus 1 through the input interface engine and are stored in memory.

In some embodiments, the output interface engine is configured to perform various aspects of embodiments of one or more of the proposed methods described herein, such as without limitation related to outputting results generated by the verification engine, for example to a user interface program for user information of such results.

The control engine of the apparatus 1 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers used for implementing the proposed methods can be configured as a multi-processor computer having multiple processors for providing parallel computing. The control engine may also comprise, or may be in communication with, computer storage media, such as, without limitation, the memory of the apparatus 1, capable of storing computer program instructions or software code that, when executed by the processor, causes the processor to perform various acts of the methods described herein. In addition, the memory may be any type of data storage computer storage medium, capable of storing data parsed by the parser engine and data corresponding to predefined properties provided to the apparatus 1 for use by the verification engine, coupled to the control engine thereof and operable with the input interface engine, output interface engine, parser engine, and verification engine, to facilitate management and processing of data stored in association therewith.

It will be appreciated that the apparatus 1 shown and described with reference to Fig. 6 is provided by way of example only. Numerous other architectures, operating environments, and configurations are possible. Other embodiments of the apparatus may include fewer or greater number of components and may incorporate some or all of the functionality described with respect to the apparatus components shown in Fig. 6. Accordingly, although the control engine, input interface engine, output interface engine, memory, parser engine, and verification engine are illustrated as part of the apparatus 1, no restrictions are placed on the location and control of these components. In particular, in other embodiments, any of these components may be part of different entities, servers, or computing systems.

While the invention has been described with respect to preferred embodiments, those skilled in the art will readily appreciate that various changes and/or modifications can be made to the invention without departing from the spirit or scope of the present subject-disclosure as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method for computer system verification, comprising:
obtaining an output data flow generated in output by the system during runtime execution of the system for a time period, the data flow comprising a system output data sequence;
processing the output data flow to obtain at least a set of metadada that are respectively related to the data of the system output data sequence; and
determining whether or not a property is verified based on the metadata.

2. A method according to claim 1, wherein the property is related to the output data flow.

3. A method according to any of the preceding claims, wherein the property is related to a system configuration parameter.

4. A method according to any of the preceding claims, wherein the property is related to a system feature.

5. A method according to any of the preceding claims, wherein the property is related to the data input of the system during the time period.

6. A method according to any of the preceding claims, further comprising: producing a verified version of the system based on the determination of whether the property is verified or not.

7. A method according to any of the preceding claims, wherein data of the system output data sequence are successively generated by execution of the system over the time period based on input data provided as input to the system.

8. A method according to any of the preceding claims, wherein the metadata are determined based on data of the system output data sequence.

9. A method according to any of the preceding claims, wherein the metadata are extracted from the system output data sequence.

10. A method according to any of the preceding claims, wherein the system is configured for multimedia data processing, and the system output data sequence comprises an output sequence of images generated as output data by the system being executed during the time period using input data.

11. A method according to claim 10, wherein the input data comprise an input sequence of images.

12. A method according to any of claims 9 and 10, wherein the metadata are respectively related to images of the output sequence of images.

13. A system verification apparatus, the apparatus comprising a processor and a memory operatively coupled to the processor, wherein the apparatus is configured to perform a method according to any of claims 1 to 13.

14. A computer program product comprising computer program code tangibly embodied in a computer readable medium, said computer program code comprising instructions to, when provided to a computer system and executed, cause said computer to perform a method according to any of claims 1 to 13.
